# EUROPEAN PATENT APPLICATION

(11) **EP 2 243 659 A1**
(43) Date of publication of application: **27.10.2010**
(21) Application number: 09158535.6
(22) Date of filing: 22.04.2009
(51) Int. Cl.: B60N 2/70

(54) **Foam element production method**

(71) Applicant: IEE International Electronics & Engineering S.A., 6468 Echternach (LU); Proseat GmbH & Co KG, 64546 Mörfelden Walldorf (DE)
(72) Inventor: Janda, Petr, 46827 Nova Ves Nad Nisou (CZ); Heinl, Georg, 64673 Zwingenberg-Rodau (DE); Treis, Alexander, 54317 Kasel (DE); Jungen, Dietmar, 54552 Mehren (DE)
(74) Representative: Office Freylinger

(57) **Abstract**

A foam element (22) configured to be equipped with an occupancy sensor is produced by a method comprising:
o providing a mould (10) having an interior surface defining a cavity in which the foam element is to be formed;
o applying a fabric layer (12) and an insert (14) on the interior surface of the mould (10), the fabric layer (12) having therein at least one slot (18), which the insert is fed through so as to partly cover the fabric layer (12) and partly be covered by the fabric layer (12); and
o injecting expandable material into the cavity and causing the material to foam and to adhere to the fabric layer (12).

## Description

### Technical field

The present invention generally relates to the manufacturing of foam elements, e.g. for vehicle or car seats, in particular to the manufacturing of foam elements configured to be equipped with an occupancy sensor.

### Background Art

Foam elements having disposed therein an occupancy sensor, such as e.g. a pressure or force sensor, are common for instance in the automotive industry, for the detection and/or classification of an occupant or object on a vehicle seat. Most frequently, such sensors are arranged on top of the foam element, directly underneath the seat trim. However, in cases where the flexibility of the sensor deviates from the flexibility of the foam element, the sensor sandwiched between the trim and the foam element may remain noticeable by a person seated on the seat. Therefore, positioning the sensor farther away from the seating surface is considered advantageous in some seat configurations to achieve a greater comfort for the seat occupant.

Document DE 197 52 976 A1 discloses a pressure-responsive switch embedded in a seat cushion of a vehicle seat. The main foam body of the seat cushion is provided at its bottom with a recess into which the pressure-responsive switch is placed and which is closed with a separate foam element, so that, in the end, the pressure-responsive switch is sandwiched between the main foam body and the separate foam element. Similar arrangements are known from DE 196 46 480 A1 and US 6,428,095. The latter document also describes a sensor being provided in a substantially horizontal slit within the seat foam.

Document EP 1 413 471 A1 discloses a cushion of a vehicle seat comprising a trim and a foam body equipped with a pressure detection mat at defined depth inside the foam body. The document further discloses a method for manufacturing such vehicle seat cushion. According to this method, the sensor mat is positioned by means of a support within a mould used for foaming the foam body, whereupon foam or precursor mixture of foam is injected into the mould and surrounds the sensor mat. The foamed body is then removed from the mould. In the cushion, the sensor mat can be wrapped within a protective sleeve that prevents a possible contamination of components of the sensor mat by the foam.

### Technical problem

It is an object of the present invention to provide a competitive alternative to the foam elements currently available and a method for producing such alternative foam elements.

### General Description of the Invention

According to the invention, a foam element configured to be equipped with an occupancy sensor is produced by a method comprising the following steps:
○ providing a mould having an interior surface defining a cavity in which the foam element is to be formed;
○ applying a fabric layer and an insert on the interior surface of the mould, the fabric layer having therein at least one slot, which the insert is fed through so as to partly cover the fabric layer and partly be covered by the fabric layer; and
○ injecting expandable material (e.g. polyurethane precursors) into the cavity and causing the material to foam and to adhere to the fabric layer.

Preferably, the foamed material (e.g. polyurethane foam) is then cured so as to form the foam element and the foam element is then removed from the mould.

Once the foam element is removed from the mould, the insert may be removed from the foam element so as to vacate a recess in the foam element hidden by the fabric layer. An occupancy sensor may now be placed into the recess instead of the insert. This may happen at the same site where the foam element has been foamed. Alternatively, the foam element (with or without the insert remaining in the recess) may be transported to another location before the occupancy sensor is put in place.

The shape and the dimensions of the insert are preferably adapted to the shape and the dimensions of the occupancy sensor to be placed into the recess. According to a preferred embodiment of the invention, the insert is a flat sheet or strip extending parallel to the fabric where it covers the latter so as to form a relatively shallow recess in the foam element behind the fabric layer. Preferably, the occupancy sensor has a thickness that is inferior to the thickness of the insert and thus to the depth of the recess. This reduces preload exerted by the foam element itself on the occupancy sensor, which is considered advantageous in particular in case the occupancy sensor is responsive to the increase of pressure caused by the presence of an occupant.

According to a preferred embodiment of the invention, the foam element is a car seat foam padding. The interior surface of the mould is this case comprises a first part that shapes an upper surface of the car seat foam padding and a second part that shapes a bottom surface of the car seat foam padding. Most preferably, the fabric layer and the insert are applied to the second part of the interior surface. In the resulting car seat foam padding, the recess for accommodating the occupancy sensor thus lies at the bottom side, where it is least noticeable by an occupant.

The fabric layer and the insert may be temporarily fixed to the interior surface of the mould with glue or with one or more pins.

The insert is preferably a metal or a plastic insert (e.g. a metal or plastic sheet or strip). The fabric layer preferably comprises or consists of at least one of a felt layer, a knitted textile layer, a woven textile layer, and a warp-knitted spacer fabric layer. The fabric layer preferably comprises a reinforcement layer at least in a region where the insert covers the fabric layer and in a region bordering the region where the insert covers the fabric layer. In the finished foam element, the reinforcement layer thus bridges the recess and strengthens the fabric layer where the foam material has not adhered to it due to the presence of the insert during the foaming. The reinforcement layer is particularly advantageous if the fabric layer covers the bottom surface of the foam element because the fabric layer then supports the occupancy sensor. In case of an occupancy sensor responsive to pressure, the reinforcement layer is preferably chosen such as to stiffen the fabric layer to such an extent that the letter exerts a reaction force from below the occupancy sensor sufficient to trigger the occupancy sensor when the foam element is loaded from above by an occupant. The reinforcement layer is preferably a textile layer itself. However, a plastic sheet or plate could also be used as reinforcement layer.

It is also possible to use an insert having non-uniform thickness. By using such an insert, one obtains a recess having modulated depth over the area of the recess. Such recess could comprise locally deeper zones (hollows) and shallower zones (protrusions). This may be advantageous if the recess has to be configured to receive an occupancy sensor with one or more pressure-sensitive cells: at the positions of the pressure-sensitive cells, protrusions of the foam element into the recess act as force concentrators. By modulating the depth of the recess, it may thus be possible to tailor the sensitivity of a pressure-responsive occupancy sensor.

An aspect of the present invention concerns a foam element as it results from the above-described production method. Such foam element comprises a fabric layer covering a surface of the foam element and has a recess in the surface for accommodating an occupancy sensor. The recess is hidden behind the fabric layer and accessible via a slot provided in the fabric layer through which the occupancy sensor may be fed into the recess. Preferably, the foam element comprises a car seat foam padding wherein the recess is provided at the bottom surface. The fabric layer may comprise a reinforcement layer at least in the region where the recess lies behind the fabric layer and in a region bordering the region the recess lies behind the fabric layer, so that the reinforcement layer spans over the hidden recess.

### Brief Description of the Drawings

Further details and advantages of the present invention will be apparent from the following detailed description of not limiting embodiments with reference to the attached drawings, wherein:
Fig. 1 is a top view of a mould for forming a car seat foam padding;
Fig. 2 is a cross-sectional view of a car seat foam padding after removal from the mould, the insert still being in place;
Fig. 3 is a cross-sectional view of the car seat foam padding of Fig. 2 when the insert still being replaced by an occupancy sensor;
Fig. 4 is a perspective view of car seat foam padding, the bottom surface of which is entirely covered with a fabric layer; and
Fig. 5 is an exploded perspective view of the car seat foam padding of Fig. 4.

### Description of Preferred Embodiments

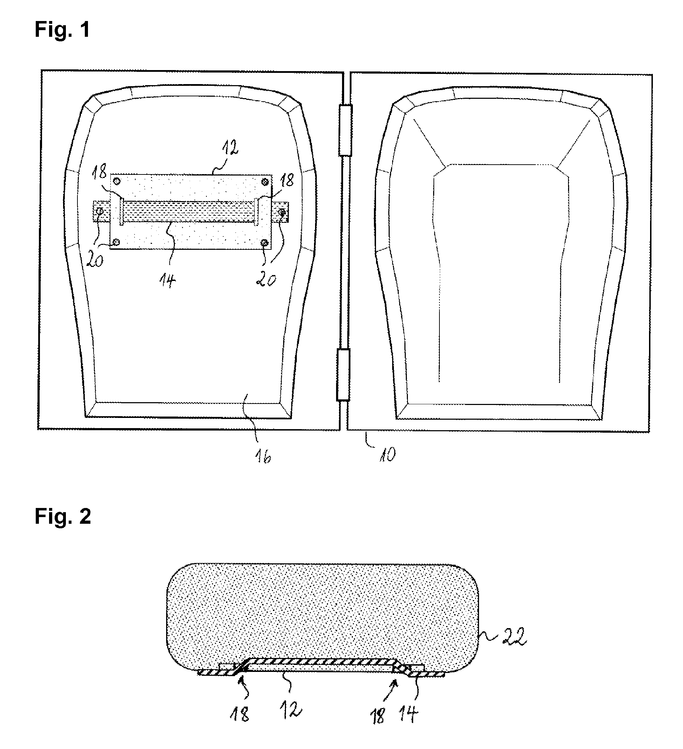

Fig. 1 shows a foaming mould 10 for forming the foam padding of the seating portion of a car seat. The mould comprises a first half for shaping the upper part of the foam padding and a second half for shaping the lower part of the foam padding. Prior to the foaming process, a felt layer 12 and a strip-shaped metal insert 14 are attached to the interior surface 16 of the second mould half. The surface 16 shapes the bottom surface of the foam padding. The felt layer 12 has two substantially parallel through-slots 18 therein. The insert 14 is passes through the slots 18 so as to partly cover the felt layer 12 and partly be covered by it. The felt layer 12 and the insert 14 are attached to the mould with pins 20 (alternatively, spots of glue could be used instead of pins). When the felt layer 12 and the insert 14 are well positioned, the mould 10 is closed, expandable material (preferably polyurethane precursors) is injected and caused to foam. As the foam expands in the mould, it penetrates the felt layer 12 where the latter is exposed (i.e. not covered by the insert 14) and adheres to the felt layer 12. Next, the foam is cured, the mould is opened and the foam padding is removed from the mould.

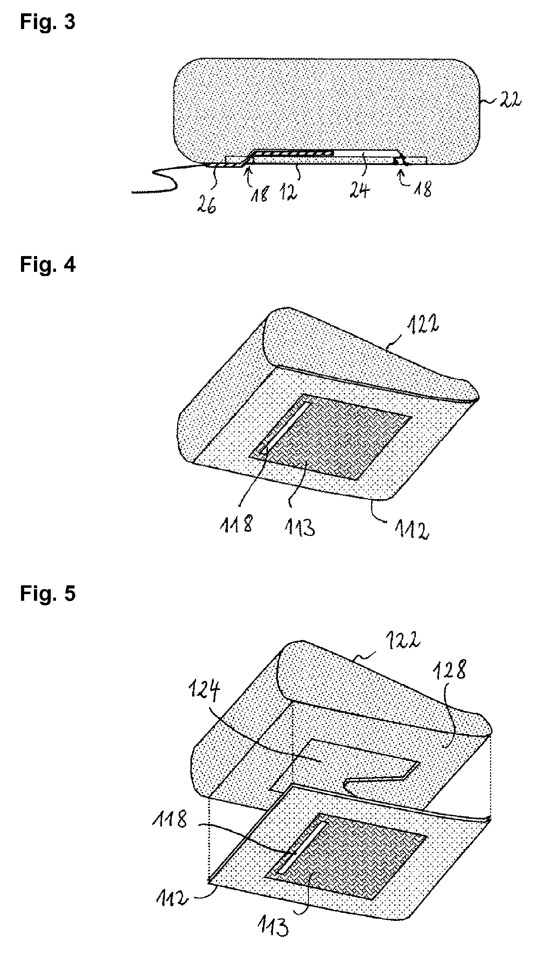

Fig. 2 shows a cross section of the foam padding 22 after removal from the mould. The insert 14, which extends substantially parallel to the felt layer 12 is still in place. When the insert 14 is removed from the foam padding 22 by pulling on one of its ends, it vacates a shallow recess 24 hidden behind the felt layer. As shown in Fig. 3, an occupancy sensor 26 may now be introduced through one of the slots 18 into the recess 24. The occupancy sensor may be of the pressure-sensing type, a capacitive sensor or based upon any other suitable measurement principle. The insert used to shape the hidden recess may be chosen in accordance with the occupancy sensor selected. If the selected occupancy sensor is responsive to pressure (load), the thickness of the insert is preferably chosen slightly larger than the thickness of the occupancy sensor to reduce possible preload by the foam padding itself.

Figs. 4 and 5 illustrate another embodiment of a car seat foam padding 122. In this case, a fabric layer 112 covers substantially the entire bottom surface 128 of the foam padding 122 and comprises a single slot 118 for removing the insert from and introducing an occupancy sensor into the recess 124. In comparison with the recess 22 of the previously described embodiment, the recess 124 is larger and has another shape. To ensure that the fabric layer is (and remains) sufficiently stiff to support an occupancy sensor, the fabric layer 112 comprises a felt layer that extends substantially over the entire bottom surface of the foam padding 122 and a reinforcement layer 113 (which may e.g. be a textile layer with suitable tensile and bending strengths) that spans the recess. As an alternative to a textile reinforcement layer, also a plastic plate could be used. The reinforcement layer 113 may be necessary, in particular, in case of a pressure-responsive occupancy sensor, to exert a reaction force from below the occupancy sensor sufficient to trigger the occupancy sensor when the foam padding 122 is loaded from above by an occupant.

## Claims

1. A method of producing a foam element configured to be equipped with an occupancy sensor, said method comprising:
providing a mould having an interior surface defining a cavity in which said foam element is to be formed;
applying a fabric layer and an insert on said interior surface of said mould, said fabric layer having therein at least one slot, which said insert fed through so as to partly cover said fabric layer and partly be covered by said fabric layer;
injecting expandable material into said cavity and causing said material to foam and to adhere to said fabric layer.

2. The method according to claim 1, comprising curing said foamed material so as to form said foam element and removing said foam element from said mould.

3. The method according to claim 2, comprising removing said insert from said foam element so as to vacate a recess in said foam element hidden by said fabric layer.

4. The method according to claim 3, wherein an occupancy sensor is placed into said recess when said insert is removed there from.

5. The method according to claim 4, wherein said occupancy sensor has a thickness that is inferior to a thickness of said insert and thus to a depth of said recess.

6. The method according to any one of claims 1 to 5, wherein said foam element is a car seat foam padding.

7. The method according to claim 6, wherein said interior surface of said mould comprises a first part that shapes an upper surface of said car seat foam padding and a second part that shapes a bottom surface of said car seat foam padding and wherein said fabric layer and said insert are applied to said second part of said interior surface.

8. The method according to any one of claims 1 to 7, wherein each of said fabric layer and said insert are fixed to said interior surface with glue.

9. The method according to any one of claims 1 to 7, wherein each of said fabric layer and said insert are fixed to said interior surface with one or more pins.

10. The method according to any one of claims 1 to 9, wherein said insert is a metal insert or a plastic insert.

11. The method according to any one of claims 1 to 10, wherein said fabric layer comprises at least one of a felt layer, a knitted textile layer, a woven textile layer, and a warp-knitted spacer fabric layer.

12. The method according to any one of claims 1 to 11, wherein said fabric layer comprises a reinforcement layer at least in a region where said insert covers said fabric layer and in a region bordering the region where said insert covers said fabric layer.

13. A foam element, configured to be equipped with an occupancy sensor, comprising a fabric layer covering a surface of said foam element, wherein said foam element has a recess in said surface for accommodating said occupancy sensor, said recess being hidden behind said fabric layer and accessible via a slot provided in said fabric layer through which said occupancy sensor may be fed into said recess.

14. The foam element according to claim 13, wherein said fabric layer comprises a reinforcement layer at least in a region where said recess lies behind said fabric layer and in a region bordering the region said recess lies behind said fabric layer.

15. A car seat comprising a foam element according to claim 13 or 14.
